# EUROPEAN PATENT APPLICATION

(11) **EP 2 353 964 A2**
(43) Date of publication of application: **10.08.2011**
(21) Application number: 11150465.0
(22) Date of filing: 10.01.2011
(51) Int. Cl.: B62B 5/00, A61G 7/08

(54) **Driving device for example for hospital bed**

(30) Priority: 13.01.2010 DK 201070013
(71) Applicant: U-B-Let A/S, DK-7100 Vejle (DK)
(72) Inventor: Raun, Knud, 7100, Vejle (DK)
(74) Representative: Gregersen, Niels Henrik

(57) **Abstract**

The invention concerns a drive device (1) for a vehicle (2), e.g. a hospital bed (2) or other vehicular object with swivel wheels, and where the drive device includes at least one motor (12), but preferably two individual motors that are connected electrically, and which are controlled and regulated via an electric differential gear. The new feature according to the invention is that the said drive wheel (3) or wheels are arranged at a position between the ends of the vehicle, that the drive device includes means for moving the drive wheels between a first position at which a drive wheel is lifted above the base and to a second position at which a drive wheel is in contact with the base. It is thus possible to engage and disengage the drive device according to need. By elevating the drive wheels to a level above the base, full manoeuvrability is achieved by the swivel wheels, whereas lowered drive wheels and activated motors entail an appreciably easier moving of a vehicle which is heavy or heavily loaded, e.g. a hospital bed with an obese person.

## Description

### Field of the Invention

The present invention concerns a drive device for a vehicle, e.g. a hospital bed or other vehicular object, where the vehicle is provided with swivelling wheels, and where the drive device includes at least one motor, but preferably two individual motors that are connected electrically and controlled and regulated via an electric differential gear. The invention furthermore concerns the use of such a drive device.

### Description of Prior Art

It is commonly known in hospitals and other places to use motorised auxiliary devices for transporting hospital beds as well as for moving linen trolleys and other transport vehicles. These known aids are a great relief to the staff having the task of providing transport for the beds and trolleys in question. Common to the beds and trolleys used in such places is that they normally are provided with freely movable wheels, also called swivelling wheels. When a trolley or bed is to be manoeuvred in place or in a narrow area, these swivelling wheels are clearly an advantage. However, when transporting along long passages, it may be difficult to control a bed or a linen trolley with swivel wheels. In order to keep the direction of such a trolley, it may be adapted such that the wheels at one end may be locked such that the wheels no longer can turn about a vertical axis. In this way is also achieved a much more directionally stable driving. However, it still requires some muscle power to control the bed or the trolley which is also to be pushed or pulled manually. This has regrettably appeared to be a still greater challenge as there are an increasing number of patients who are overweight and even some who are obese, for who use of particularly strong and wide hospital beds are required. Such beds may be difficult to handle manually, partly due to their size but in particular due to their weight when a patient of several hundreds kilograms is placed in the bed.

There exist various driving devices with motor which may be used on hospital beds, and with such apparatuses a bed can be moved without great muscular effort. Furthermore, there are systems that may be incorporated in beds as well as in transport trolleys.

For example, from US 2002/0084116 Al is known a motor unit which via a coupling system is coupled to a bed or the like. This motor unit is provided with the drive wheels situated in the same area in which the coupling is taking place and it is thus capable of drawing the bed in a directionally stable way. However, when manoeuvring accurately in narrow passages or rooms, the movement is to take place with large turns as control is effected about the coupling at one end of the bed, and thereby the action of swivelling wheels at each corner of the bed cannot be utilised.

It is the object of the invention to indicate a drive device where the drive device can be used for transporting a vehicle in the form of a hospital bed or other type of vehicle where the drive device may be activated and deactivated according to need, where by use of such a drive device a large degree of manoeuvrability is achieved.

### Description of the Invention

As mentioned in the introduction, the invention concerns a drive device for a vehicle, e.g. a hospital bed or other vehicular object, and where the drive device includes at least one motor, but preferably two individual motors that are connected electrically, where the motor or motors are connected to two drive wheels. The new feature of a drive device according to the invention is that the said drive wheel or wheels are arranged at a position between the ends of the vehicle, wherein the drive device includes means for moving the drive wheels between a first position at which a drive wheel is lifted above the base and to a second position at which a drive wheel is in contact with the base.

It is thus possible to engage and disengage the drive device according to need. By elevating the drive wheels to a level above the base, full manoeuvrability is achieved by the swivelling wheels, whereas lowered drive wheels and activated motors provide an appreciably easier moving of a vehicle which is heavy or heavily loaded, e.g. a hospital bed with an obese person. Unfortunately, there is presently a tendency to more and more people becoming obese, weighing up to several hundred kilograms. When such obese persons get in contact with the health care system, a number of problems often entail. A common hospital bed is not sufficiently large and not sufficiently strong to bear the required load. In order to counter this problem is has become usual that a hospital have at its disposal a small number of hospital beds which are made particularly strong and wide so that this group of patients can be handled. However, such a hospital bed is often somewhat heavier than a common hospital bed, and doors, lifts and passageways are in many cases too narrow, and not the least it may be almost impossible to move a hospital bed with the obese person from one location to another. By a drive device according to the invention, the latter challenge becomes somewhat easier as a single hospital porter is made capable of moving such a large bed with a large patient by means of the drive device.

In one variant of a drive device according to the invention, this includes at least one side member, where the side member is constituted by a - relative to the vehicle - longitudinal member upon which a support arm is pivotably fixed at a first end, where a drive wheel is mounted at the second end of the support arm, where the support arm at the second end is connected to the side member or other fixed part on the vehicle via at least one actuator, preferably an electric linear actuator.

Such a drive unit will typically consist of two sets of side members etc. where one set is mounted at each their side of a vehicle. By mounting the drive wheels at one end of a support arm and further having the support arm connected with the vehicle or the side member via an actuator, there is achieved the advantage that the drive wheels can be lowered and applied according to need, and elevated by manoeuvring under tight conditions where the properties of the swivel wheels are advantageous. Also, when passing unevenesses on the base, such as doorsteps and similar, the drive wheels may advantageously be elevated in order not to subject the vehicle to bumps when an unevenness is passed.

By such a solution, it is furthermore possible to increase the pressure of the drive wheels against the base by activating the actuator and let it press the drive wheels hard against the base, whereby sufficient friction can be achieved between drive wheels and base. This friction is of utmost importance as lack of friction can cause a heavily laden vehicle to be difficult to hold and control on a non-planar base.

In a preferred variant of a drive device according to the invention, the drive device may include a torsional spring arranged between the support arm and the actuator. Hereby is achieved the advantage that it is the torsional spring which ensures the perfect pressure between drive wheel and base. At the same time, a more springing design is achieved as a vehicle with a drive device according to the invention may now pass lesser irregularities without the drive wheels loosing contact with the base, as the drive wheels are flexibly mounted and will thus press themselves against the base by means of the mentioned torsional spring.

In a special variant of the invention, the drive device is equipped with a torsional arm which at a first end is connected with the torsional spring and at the second end with the actuator. By such a torsional arm there is achieved possibility of applying an even greater force on the support arm and the torsional spring, whereby an even better and more certain contact between drive wheels and base is achieved. At the same time, a smaller actuator can be applied since it acts on an arm, thereby applying a greater torque on the torsional spring.

In a variant of a drive device according to the invention, the drive device includes an actuator support arm which is pivotably fixed to the side member at one end and pivotably fixed to the actuator at the other end, where the actuator support arm is provided with means for releasable fastening in relation to the side member. By loosening the actuator support arm from the releasable fixing to the side member, all of the part of the drive device that includes support arm, motor, drive wheel, torsional spring, torsional arm and actuator may be lifted mechanically and manually off the base. This may be particularly practical when somewhat larger/higher obstacles are to be passed, including doorsteps and similar. When the actuator support arm is fixed to the side member, the drive device and thereby the actuator may be actuated such that forces can be transmitted between drive wheels and base.

In order to ensure that the drive wheels do not get in inadvertent contact with objects, the drive device may advantageously include at least one guard at each of the said drive wheels. This may be an actual screen around the drive wheel, a protection bar or a deflection block disposed immediately in front of and/or behind a drive wheel.

In a preferred embodiment, a drive device according to the invention is arranged as an assembled unit, where the unit is adapted for mounting on a vehicle, e.g. a hospital bed or a linen trolley, where the assembled unit includes a side member adapted for mounting along a longitudinal profile on the vehicle, where mounting of such a drive device is effected by bolting. This may typically be effected by loose fittings or by mounting directly on fixed fittings suited for the purpose on a vehicle. It is thus possible to mount a drive device according to the invention on many types of vehicles/hospital bed by which an easier handling of these vehicles is achieved.

A drive device according to the invention may advantageously be provided with electric motors and with electric actuators and may thus further include one or more actuators which may be detachable or fixed on the vehicle or on the drive device.

Finally, the invention also concerns use of a drive device as described above, where the use of the drive device occurs in connection with moving of vehicles, including hospital beds, linen trolleys and other kinds of vehicles with swivel wheels.

As mentioned in the introduction, the said differential gear may advantageously be of an electric type as it has appeared to include the advantage that such a differential gear does not take up much space, and that the drive device thereby will take up less space and thereby more easily be adapted to a plurality of different types of vehicles. The differential gear ensures that there is always an optimal power distribution between the drive wheels, whereby control becomes easier as the power distribution between the wheels in the drive wheels is regulated and adjusted when turning the vehicle.

It is obvious that after realising the main features of the invention, the skilled in the art will be able to design variants that are not outrightly described in this publication. These types of variants are, however, considered comprised by the present invention and the subsequent patent claims, as such variants are based on the same fundamental idea as the disclosed variants.

### Short Description of the Drawing

The invention is described in detail in the following with reference to the drawing, where:
Fig. 1 shows an example of a drive device mounted on a hospital bed.
Fig. 2 shows a schematic drawing of a drive device.

### Detailed Description of Embodiments of the Invention

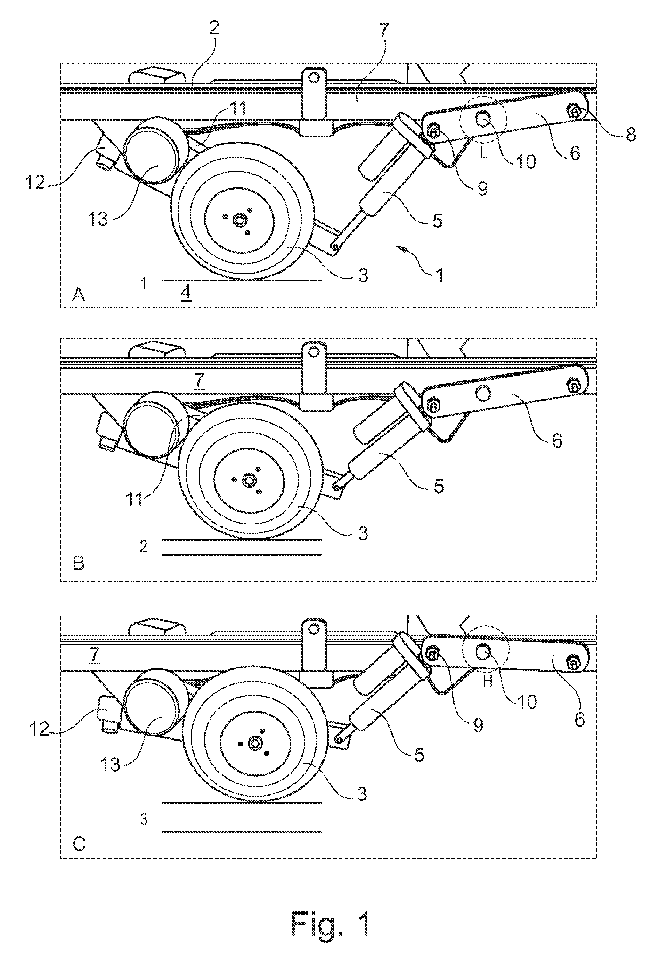

In Fig. 1 is seen a drive device 1 which is mounted on a hospital bed 2. It is shown in three different positions. In position A, the drive wheel 3 is in contact with the base 4 as the actuator 5 is extended.

In position B, the drive wheel 3 is lifted off the base 4 as the actuator 5 is retracted. In this position, the drive wheel is in principle in a not activated position but may rapidly be applied by activating the actuator 5.

At position C, the drive wheel is elevated even more above the base 4, as the actuator support arm 6 which is pivotably connected to the side member 7 at one end 8 and pivotably connected to the actuator 5 at the other end 9 is released from its fixation relative to the side member 7. This releasing from the side member occurs by releasing the coupling means 10 which in the fixed position engages a corresponding coupling member. With the drive wheel 3 at this position, it is possible to pass various unevenesses on the base. This may e.g. be doorsteps or similar.

Fixing or releasing the actuator support arm 6 from the fixed position may in the shown variant occur manually by operating the coupling means 10. This may of course also be performed with electric or mechanical operating means that advantageously may be arranged together with the other operating means.

As it appears in the Figure, the drive device 1 itself is made as a separate unit which is fixed to a hospital bed 2. The main element in the drive device is the side member 7 which is mounted along a more or less corresponding longitudinal frame or side member part on the hospital bed. A support arm 11 with the drive wheel itself and associated motor 12 are connected with this side member 7. The support arm 11 is furthermore connected with an actuator 5 which in principle could be directly connected to the side member 7, but in the shown variant the actuator 5 is connected to the side member 7 via an actuator support arm 6, providing an increased possibility of lifting and lowering the drive wheel 3.

The drive wheel 3 is mounted on a support arm 11 which at one end is pivotably connected with the side member 7. Along with the support arm 11, on its inner side, there is mounted an electric motor 12 which via not shown connection wires is connected with a set of not shown operating means. A guard 13, in the shown variant in the form of a plastic block with rounded edges, is seen immediately in front of the drive wheel 3.

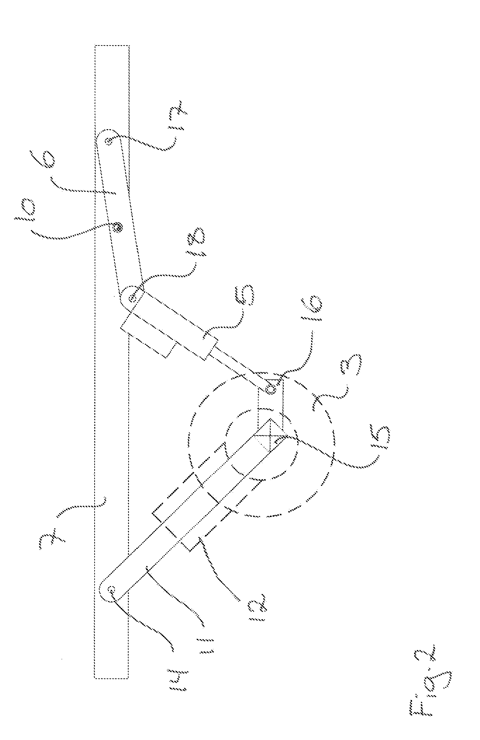

In Fig. 2, the same part elements as mentioned in the description of Fig. 1 are seen in principle but here with the drive wheel 3 and the motor 12 shown with broken lines. The various part elements become more visible hereby. At the top, the side member 7 upon which the support arm 11 is mounted with movable connection 14 is seen. At the other end of the support arm, a torsional spring 15 is fixed and further connected with a torsional arm 16. An actuator support arm 6 is further connected with the side member 7 at one end 17 of the arm 6. Between the other end 18 of the actuator support arm and the previously mentioned torsional arm 16, an actuator 5 is mounted. Between the actuator support arm 6 and the side member 7 there are releasable fixing means 10 which are used for locking and releasing the mobility of the said actuator support arm 6, whereby a greater clearance height under the hospital bed/vehicle is attained.

The torsional spring 15 and the torsional arm 16 provide that the actuator 5 can be activated by an on/off function as the optimal action of force between drive wheels 3 and base 4 is ensured by the spring force exerted by the torsional spring 15.

The side member 7 is adapted with not shown means for fixing to a frame or side member part on a hospital bed or on another vehicle. These means may be bolts or clamps, or other suitable means.

## Claims

1. A drive device for a vehicle, e.g. a hospital bed or other vehicular object, where the vehicle includes swivel wheels at one end and at the other end, and where the drive device includes at least one motor, but preferably two individual motors that are connected electrically, where the motor or motors are connected to two drive wheels for contact with a base, where motors and thereby drive wheels are preferably controlled and regulated via an electric differential gear which is connected with further control means, such as e.g. an activation handle and a speed regulator, **characterised in that** the said drive wheel or wheels are arranged at a position between the ends of the vehicle, that the drive device includes means for moving the drive wheels between a first position at which a drive wheel is lifted above the base and to a second position at which a drive wheel is in contact with the base.

2. A drive device according to claim 1, **characterised in that** the drive device includes at least one side member, where the side member is constituted by a - relative to the vehicle - longitudinal member upon which a support arm is pivotably fixed at a first end, that a drive wheel is mounted at the second end of the support arm, where the support arm at the second end is connected to the side member or other fixed part on the vehicle via at least one actuator, preferably an electric linear actuator.

3. A drive device according to claim 1 and 2, **characterised in that** the drive device includes a torsional spring arranged between the support arm and the actuator.

4. A drive device according to claim 3, **characterised in that** the drive device includes a torsional arm which at a first end is connected with the torsional spring and at the second end with the actuator.

5. A drive device according to any of claims 1-4, **characterised in that** the drive device includes an actuator support arm which is pivotably fixed to the side member at one end and pivotably fixed to the actuator at the other end, where the actuator support arm is provided with means for releasable fastening in relation to the side member.

6. A drive device according to any of claims 1-5, **characterised in that** the drive device includes at least one guard at each of the drive wheels.

7. A drive device according to any of claims 1-6, **characterised in that** the drive device is an assembled unit, where the unit is adapted for mounting on a vehicle, e.g. a hospital bed or a linen trolley, where the assembled unit includes a side member adapted for mounting along a longitudinal profile on the vehicle, where mounting of such a drive device is effected by bolting.

8. Use of a drive device according to any of claims 1 -7, **characterised in that** that the use of the drive device occurs in connection with moving of vehicles, including hospital beds, linen trolleys and other kinds of vehicles with swivel wheels.
